# EUROPÄISCHE PATENTANMELDUNG

(11) **EP 4 295 968 A1**
(43) Veröffentlichungstag der Anmeldung: **27.12.2023**
(21) Anmeldenummer: 23179377.9
(22) Anmeldetag: 15.06.2023
(51) Int. Cl.: B21D 43/05, B21D 43/10, B21F 1/00, B21F 23/00, B21D 7/12, B21D 11/10

(54) **UMFORMMASCHINE MIT MEHREREN ARBEITSSTATIONEN**

(30) Priorität: 20.06.2022 DE 102022206118
(71) Anmelder: WAFIOS Aktiengesellschaft, 72764 Reutlingen (DE)
(72) Erfinder: Fries, Stefan, 72764 Reutlingen (DE); Walz, Bernd, 72793 Pfullingen (DE)
(74) Vertreter: Patentanwälte Ruff, Wilhelm, Beier, Dauster & Partner mbB

(57) **Zusammenfassung**

Eine Umformmaschine (100) zur Herstellung komplex gebogener Formteile aus geraden Werkstücken (WS) aus Draht oder Rohr umfasst eine computernumerische Steuereinheit (190), mehrere Arbeitsstationen, die eine Ladestation (110), eine der Ladestation nachgeschaltete erste Bearbeitungsstation (410) und wenigstens eine der ersten Bearbeitungsstation (410) nachgeschaltete zweite Bearbeitungsstation (420) umfassen, wobei wenigstens zwei der Bearbeitungsstationen als Umformstationen ausgelegt sind, und ein Transportsystem (500) zum Transportieren aufeinanderfolgender Werkstücke (WS) von der Ladestation (400) zu nachgeschalteten Arbeitsstationen unter der Steuerung durch die Steuereinheit (190). Das Transportsystem (500) ist modular aufgebaut und weist mehrere Transportmodule (550) auf, wobei jedes der Transportmodule zwei aufeinander folgenden Arbeitsstationen zugeordnet ist und folgende Komponenten aufweist: eine Tragestruktur (510), eine von der Tragestruktur (510) getragene Transporteinheit (520), die unter Steuerung durch die Steuereinheit (190) individuell im Pendelbetrieb entlang einer Modul-Transportstrecke (525) des Transportmoduls (550) zwischen einer ersten Endposition (522-1) und einer zweiten Endposition (522-2) hin und her bewegbar ist und eine Greifeinheit (560) zum Greifen eines Werkstücks aufweist.

## Beschreibung

### ANWENDUNGSGEBIET UND STAND DER TECHNIK

Die Erfindung bezieht sich auf eine Umformmaschine zur Herstellung komplex gestalteter Formteile aus geraden Werkstücken aus Draht oder Rohr gemäß dem Oberbegriff von Anspruch 1. Weiterhin betrifft die Erfindung eine Umformanlage, die eine solche Umformmaschine umfasst.

Eine computernumerisch gesteuerte Umformmaschine der hier betrachteten Art weist mehrere Arbeitsstationen auf. Zu den Arbeitsstationen gehört eine Ladestation, über die die Umformmaschine mit den zu verarbeitenden, üblicherweise geraden Werkstücken beladen werden kann, sowie eine der Ladestation nachgeschaltete erste Bearbeitungsstation und wenigstens eine dieser ersten Bearbeitungsstation nachgeschaltete zweite Bearbeitungsstation. Eine Bearbeitungsstation ist eine Arbeitsstation, in der das Werkstück bearbeitet und dadurch in seinen Eigenschaften, insbesondere hinsichtlich seiner Form bzw. Gestalt, verändert wird. Wenigstens zwei der Bearbeitungsstationen sind als Umformstationen ausgelegt, an denen das Werkstück z.B. durch Biegen oder Pressen umgeformt wird. Mit der Umformmaschine werden unter der Steuerung durch eine Steuereinheit mehrere Umformoperationen realisiert, zusätzlich können auch andere Bearbeitungen vorgesehen sein, z.B. eine spanende Bearbeitung.

Die zu verarbeitenden Werkstücke durchlaufen die Arbeitsstationen sukzessive. Hierzu weist die Umformmaschine ein Transportsystem zum Transportieren aufeinanderfolgender Werkstücke von der Ladestation zu nachgeschalteten Arbeitsstationen auf. Das Transportsystem arbeitet unter der Steuerung durch die Steuereinheit. Solche Mehrstationen-Umformmaschinen werden in der Regel eingesetzt, wenn es darum geht, große Stückzahlen gegebenenfalls komplex gestalteter Formteile in kurzer Zeit herzustellen.

Ein Formteil im Sinne dieser Anmeldung ist ein in der Regel überwiegend oder ausschließlich aus Metall bestehendes Zwischenprodukt oder Endprodukt, das ausgehend von einem Rohling hergestellt wird, wobei während des Herstellungsprozesses die ursprüngliche Gestalt bzw. Form des Rohlings durch Bearbeitung gezielt verändert wird. Die Bearbeitung umfasst dabei Umformoperationen, die die Gestalt im Wesentlichen ohne Materialabtrag verändern, wie z.B. Biegen oder Pressen oder Prägen. Zusätzlich können andere Bearbeitungen vorgesehen sein, insbesondere materialabtragende Bearbeitungen wie z.B. Stanzen, Lochen, Gewindeschneiden, Fräsen, Fasen und/oder Planen.

Das Dokument US 2005/145003A1 beschreibt ein computernumerisch gesteuertes Biegesystem mit einer Reihe von Biegestationen, die jeweils mit einem Biegekopf ausgestattet sind. Die Werkstücke werden mithilfe von Greifern von einer Biegestation zur nächsten transportiert. Die Greifer sind an einem zweiachsigen Portal aufgehängt und greifen das Werkstück vorzugsweise in einem mittleren Bereich. Jeder Biegekopf greift das Rohr an einer anderen Zwischenposition. In der bevorzugten Ausführungsform ist jede Biegestation in der Lage, den Biegekopf so zu positionieren, dass das freie Ende des zu biegenden Werkstücks in der Biegeebene ohne Beeinträchtigung durch eine benachbarte Biegestation ausgerichtet werden kann.

Die Firma Schmale Maschinenbau GmbH bietet unter der Bezeichnung "X2000NC" eine rein servoelektrisch betriebene Drahtbiegemaschine an, die aufgrund eines modularen Aufbaus mit einer Arbeitswand und daran montierbaren Arbeitseinheiten eine variable Bestückung mit unterschiedlichsten Aggregaten erlaubt, um auch komplexe Umformprozesse zu realisieren (https://www.schmale-gmbh.de/maschinen/x2000nc.html). Mit Biegeschiebern, Stanz-, Stauch- und Prägepressen können viele geforderte Umformprozesse realisiert werden. Für den Werkstücktransport von Arbeitsstation zu Arbeitsstation ist ein Lineartransfer vorgesehen, der die verschiedenen Umformstationen gleichzeitig bedient und dadurch wesentlich schneller sein soll als gewöhnliche CNC-Drahtbiegemaschinen.

Es wird weiterhin Bedarf an Umformmaschinen gesehen, die einerseits mit hoher Stückleistung arbeiten können und andererseits dem Nutzer große Flexibilität hinsichtlich der damit realisierbaren mehrstufigen Prozesse bieten.

### AUFGABE UND LÖSUNG

Vor diesem Hintergrund liegt der Erfindung die Aufgabe zugrunde, eine Umformmaschine der eingangs erwähnten Art bereitzustellen, die in der Lage ist, komplex gestaltete Formteile in hoher Stückleistung zu fertigen und andererseits dem Nutzer hohe Flexibilität hinsichtlich der Realisierung unterschiedlicher mehrstufiger Umformprozesse bei günstigen Kosten bietet.

Zur Lösung dieser Aufgabe stellt die Erfindung eine Umformmaschine mit den Merkmalen von Anspruch 1. Weiterhin wird eine Umformanlage mit den Merkmalen von Anspruch 11 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einer Formulierung der Erfindung zeichnet sich eine Umformmaschine gegenüber dem Stand der Technik u.a. durch Besonderheiten der Auslegung des Transportsystems aus. Das Transportsystem ist modular aufgebaut. Das Transportsystem umfasst mehrere Transportmodule, also zwei, drei, vier oder mehr Transportmodule. Jedes der Transportmodule ist mindestens zwei aufeinanderfolgenden bzw. hintereinander geschalteten Arbeitsstationen zugeordnet. Ein Transportmodul umfasst eine Tragestruktur sowie eine von der Tragestruktur getragene Transporteinheit. Die Transporteinheit kann unter Steuerung durch die Steuereinheit individuell, d.h. mit individuellem Bewegungsprofil, im Pendelbetrieb entlang einer Modul-Transportstrecke des Transportmoduls zwischen einer ersten Endposition und einer zweiten Endposition der Pendelbewegung hin- und herbewegt werden. Eine Transporteinheit weist eine (steuerbare) Greifeinheit zum Greifen eines Werkstücks auf.

Eine Greifeinheit fungiert als Werkstückaufnahmeeinheit zum steuerbaren Aufnehmen und Freigeben eines Werkstücks. Die Greifeinheit ist bei vielen Ausführungsformen als mechanische Greifeinheit zum mechanischen Greifen eines Werkstücks ausgebildet. Dazu ist die Greifeinheit mit wenigstens einem beweglichen Teil ausgestattet, das z.B. elektrisch oder pneumatisch betätigt werden kann. Das Werkstück kann z.B. durch Klemmung ergriffen und festgehalten werden. Eine Greifeinheit kann auch als Magnet-Greifeinheit ausgebildet sein, die ggf. keine mechanisch beweglichen Teile benötigt. Hier werden magnetische Kräfte zum Aufnehmen und Festhalten ferromagnetischer Werkstücke genutzt. Eine Magnet-Greifeinheit kann einen elektrisch ansteuerbaren Elektromagneten aufweisen, der im eingeschalteten Zustand ein Werkstück an der Greifeinheit festhält und bei Abschalten des Stroms das Werkstück freigibt.

Ein Transportmodul im Sinne dieser Anmeldung ist eine gesondert montierbare Baugruppe, deren Komponenten gemeinsam zum Aufbau oder zur Erweiterung der Umformmaschine eingebaut und eingerichtet werden können und die bei Bedarf auf einfache Weise eine Erweiterung des Gesamtsystems erlaubt.

Der modulare Aufbau des Transportsystems bietet einem Nutzer gegenüber herkömmlichen Transfersystemen erhebliche Vorteile.

Zum einen wird das Transportsystem aufgrund des modularen Aufbaus sehr einfach skalierbar, wobei für eine Umformmaschine mit wenigen Bearbeitungsstationen auch nur entsprechend weniger Transportmodule benötigt werden und gegebenenfalls eine nachträgliche Erweiterung der Umformmaschine durch Nachrüsten weiterer Transportmodule (eines oder mehrere) schnell und kostengünstig sowie passgenau möglich ist.

Ein modular aufgebautes Transportsystem bietet auch Vorteile hinsichtlich der Dynamik und dadurch bedingt auch hinsichtlich der erzielbaren kurzen Taktzeiten. Bei den Umformmaschinen des eingangs erwähnten Standes der Technik "X2000NC" sind alle Greifeinheiten auf einer gemeinsamen Trägerschiene montiert. Diese wird von einem parallel zur Transportrichtung hin- und her bewegbaren gemeinsamen Träger getragen, der von einem entsprechenden stark ausgelegten Antrieb hin- und herbewegt wird und zwei weitere Antriebe trägt, die koordiniert mit der Hin- und Her-Bewegung des Trägers einen Querhub der die Transporteinheiten tragenden Schiene in Richtung der Bearbeitungseinheiten und zurück bewirken können. Hier müssen somit jeweils erhebliche Massen bewegt werden, bei einzelnen Transportmodulen sind die bewegten Massen dagegen deutlich geringer, so dass höhere Beschleunigungen und damit kürzere Taktzeiten erzielbar sind.

Ein weiterer Vorteil ergibt sich im Hinblick auf die Flexibilität des Aufbaus. Jedes der Transportmodule definiert eine Modul-Transportstrecke, deren Länge zwischen einem ersten und einem zweiten Ende konstruktiv vorgegeben ist. Diese Modul-Transportstrecke kann für die Pendelbewegung vollständig genutzt werden, so dass die erste Endposition und die zweite Endposition der Pendelbewegung an den jeweiligen Enden der Modul-Transportstrecke liegen. Jedoch muss für eine Pendelbewegung nicht die komplette Modul-Transportstrecke genutzt werden. Auch Pendelbewegungen mit geringerem Pendelhub sind möglich, so dass zum Beispiel die erste Endposition mit Abstand vom ersten Ende der Modul-Transportstrecke und/oder die zweite Endposition der Pendelbewegung mit Abstand vom zweiten Ende der Modul-Transportstrecke liegen kann. Dadurch kann unter anderem erreicht werden, dass die Bearbeitungseinheiten an den zu verbindenden Arbeitsstationen nicht in einem exakten Abstandsmaß zueinander angebracht werden müssen. Vielmehr kann durch die Steuerung der Pendelhub, also der Abstand zwischen der ersten und der zweiten Endposition der Pendelbewegung, entlang der Modul-Transportstrecke, jederzeit steuerungstechnisch optimal an die Abstände zwischen den Arbeitsstationen angepasst werden. Dadurch kann unter anderem beim Einrichten viel Zeit gespart werden, da Arbeitseinheiten nicht völlig exakt in einem bestimmten Raster angebracht werden müssen.

Gemäß einer Weiterbildung weist ein Transportmodul zum Bewegen der Transporteinheit entlang der Transportstrecke ein Modul-eigenes Antriebssystem mit einem von der Tragestruktur getragenen und durch die Steuereinheit ansteuerbaren Transportantrieb auf. Die Komponenten des Antriebssystems können also gemeinsam mit dem zugehörigen Transportantrieb vormontiert und als Bestandteil des Transportmoduls ein- und ausgebaut werden.

Bei bevorzugten Ausführungsformen weist eine Transporteinheit einen entlang der Modul-Transportstrecke bewegbaren Grundträger auf, der einen quer, insbesondere senkrecht zur Modul-Transportstrecke verfahrbaren Greifarm, mit einer am Ende des Greifarms montierten Greifeinheit trägt, wobei der Grundträger einen durch die Steuereinheit ansteuerbaren Antrieb zur Bewegung des Greifarms trägt. Der Antrieb für den Greifarm ist somit ein mit der Transporteinheit mitfahrender Antrieb, so dass die Transporteinheit auch diese Funktionalität integriert.

Jedes Transportmodul kann somit zwei individuell steuerbare Antriebe aufweisen, nämlich einen für den Pendelhub in Haupt-Transportrichtung und einen für den Querhub, der vorzugsweise senkrecht zum Pendelhub ausgerichtet ist. Damit kann der Pendelhub mit variabel vorgebbarer Hublänge und variabel vorgebbarem Bewegungsprofil programmiert werden, entsprechendes gilt für den Querhub.

Vorzugsweise ist an wenigstens einer Bearbeitungsstation, z.B. wenigstens an einer oder an jeder der Biegestationen, eine Werkstückhaltevorrichtung zur Aufnahme eines Werkstücks an der entsprechenden Bearbeitungsstation vorgesehen. Die Werkstückhaltevorrichtung kann das zu bearbeitende Werkstück in einer Bearbeitungsposition halten bzw. in diese Position bringen, in der es dann mithilfe von Werkzeugen einer Bearbeitungseinheit der Bearbeitungsstation umgeformt oder auf andere Weise bearbeitet wird. Eine als Greifeinheit ausgebildete Werkstückaufnahmeeinheit ist vorzugsweise dazu konfiguriert und geeignet, eine solche Werkstückhaltevorrichtung mit dem Werkstück zu beladen und zu entladen.

Gemäß einer Weiterbildung ist vorgesehen, dass wenigstens bei einer der Transporteinheiten, gegebenenfalls auch bei zwei oder mehr der Transporteinheiten oder bei allen Transporteinheiten, die Greifeinheit um eine Greifeinheits-Drehachse drehbar am Greifarm gelagert ist und/oder dass bei wenigstens einer der Transporteinheiten die Greifeinheit in Bezug auf den Grundträger höhenverstellbar ist. Die Greifeinheits-Drehachse verläuft vorzugsweise parallel zur Translationsachse des Greifarms. Durch diese zusätzliche Funktionalität ist ein weiterer Freiheitsgrad bei der Positionierung des Werkstücks an einer Arbeitsstation bzw. in Bezug auf die Werkstückhaltevorrichtung der Arbeitsstation gegeben. Damit ist es gegebenenfalls unter anderem möglich, die Werkstückhaltevorrichtungen einfacher als bei herkömmlichen Systemen auszugestalten, indem bei der Werkstückhaltevorrichtung auf integrierte Drehachsen verzichtet wird. Alternativ oder zusätzlich ist auch eine lineare Bewegung der Greifeinheit in z-Richtung denkbar, also in Höhenrichtung. Eine solche Höhenverstellung kann z.B. pneumatisch oder servomotorisch realisiert sein.

Gemäß einer Weiterbildung sind die Transportmodule in mehreren Reihen, insbesondere in zwei Reihen, hintereinander versetzt derart angeordnet, dass die Modul-Transportstrecken unmittelbar aufeinanderfolgender Transportmodule an einer Arbeitsstation in einem Überlappungsbereich überlappen. Dadurch kann erreicht werden, dass die Transporteinheit eines der Transportmodule das Werkstück zur Arbeitsstation bringen und übergeben kann und die Transporteinheit des benachbarten Transportmoduls das Werkstück bei Bedarf am gleichen Ort aufnehmen und weitertransportieren kann.

Gemäß einer Weiterbildung umfasst das Transportsystem einer Umformmaschine mehrere im Wesentlichen identisch zueinander aufgebaute und dimensionierte Transportmodule. Insbesondere können alle Transportmodule des Transportsystems mit einheitlicher Länge, also mit einheitlicher Modul-Transportstrecke und/oder mit einheitlichem Transport-Antriebssystem aufgebaut sein. Der Aufbau mit nominell identischen Baugruppen schlägt sich u.a. in günstigen Herstellungskosten für ein Transportsystem nieder, da Mengeneffekte genutzt werden können. Dennoch bleibt die Flexibilität uneingeschränkt erhalten, da nicht bei jedem der Transportmodule die volle zur Verfügung stehende Modul-Transportstrecke für den Pendelhub genutzt werden muss. Denn ein Transportmodul erlaubt grundsätzlich nicht nur einen Pendelbetrieb zwischen den Enden der Modul-Transportstrecke. Stattdessen kann ein Transportmodul auch so verwendet bzw. angesteuert werden, dass ein Pendelbetrieb nur über eine kürzere Teilstrecke erfolgt. Es ist also nicht nötig, in jedem Fall die konstruktiv maximal mögliche Modul-Transportstrecke auszunutzen. Die Flexibilität bei der Verteilung der Modul-Transportstrecken des Transportsystems kann für eine weitere Flexibilisierung des Gesamtaufbaus genutzt werden.

Es ist jedoch auch möglich, Transportmodule unterschiedlicher Auslegung zu kombinieren. Insbesondere können Transportmodule mit unterschiedlich langen Modul-Transportstrecken kombiniert werden.

Alternativ oder zusätzlich ist es auch möglich, die Transportmodule relativ zueinander so zu positionieren, dass zwischen unterschiedlichen Transportmodulen unterschiedlich lange Überlappungsbereiche existieren.

Bei manchen Ausführungsformen sind die Arbeitsstationen der Umformmaschine in gleichmäßiger Teilung verteilt, was hier bedeutet, dass der Abstand der Bearbeitungspositionen an benachbarten Bearbeitungsstationen jeweils gleich groß ist. Es ist jedoch auch möglich, dass die Bearbeitungsstationen in ungleicher Teilung angeordnet sind, so dass die entlang der globalen Transportstrecke gemessenen Abstände zwischen aufeinanderfolgenden Arbeitsstationen unterschiedlich groß sein können. Damit kann der zur Verfügung stehende Bauraum für die Anbringung von Bearbeitungseinheiten optimal genutzt werden, so dass auch Maschinen, die sehr viele und ggf. unterschiedlich komplexe Umformstufen und Bearbeitungsstufen ermöglichen, noch mit kompakten Dimensionen aufgebaut werden können.

Da jedes Transportmodul eine eigene Transporteinheit aufweist, die mit individuellem Bewegungsprofil steuerbar ist, sind auch sehr individuelle Kombinationen von Transportstrecken ohne weiteres realisierbar. Die Arbeitsbewegungen der Transporteinheit eines Transportmoduls können sich über die Zeit deutlich von den Arbeitsbewegungen eines der anderen Transportmodule unterscheiden. So kann es unter anderem sein, dass sich eine Transporteinheit an einer Arbeitsstation zur Realisierung des dort vorgesehenen Bearbeitungsprozesses phasenweise bewegt, zum Beispiel um das Werkstück neu zu positionieren, während an einem oder mehreren anderen Transportmodulen die Transporteinheiten ruhen oder nach einem anderen Bewegungsprofil gesteuert werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt eine schematische schrägperspektivische Ansicht einer Umformanlage zum Herstellen komplex gebogener Umformteile aus Draht oder Rohr gemäß einem Ausführungsbeispiel;
- Fig. 2: zeigt ein Detail der Umformmaschine mit einem Teil des modular aufgebauten Transportsystems;
- Fig. 3: zeigt eine Draufsicht auf das Transportsystem mit vier Transportmodulen;
- Fig. 4: zeigt einen Ausschnitt des Transportsystems mit zwei Transporteinheiten, wobei eine davon eine drehbare Greifeinheit aufweist;
- Fig. 5: zeigt eine Umformmaschine mit einer Erweiterung des Maschinengestells und einem weiteren Transportmodul;
- Fig. 6A bis 6F: zeigen unterschiedliche Beispiele individueller Bewegungsprofile für die Hübe in x-Richtung und in y-Richtung.

### DETAILLIERTE BESCHREIBUNG DER AUSFÜHRUNGSBEISPIELE

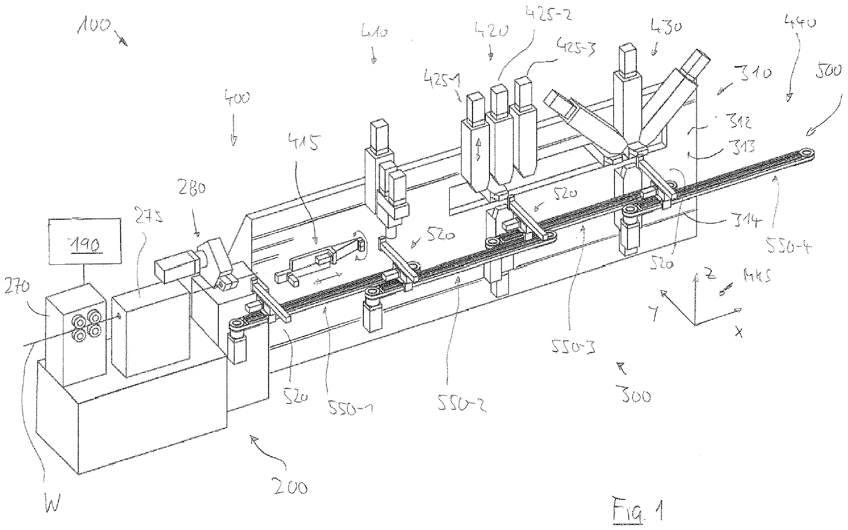

Die Fig. 1 zeigt eine schematische schrägperspektivische Ansicht einer Umformanlage 100 zum Herstellen komplex gestalteter Formteile aus Draht oder Rohr gemäß einem Ausführungsbeispiel. Es handelt sich um eine computernumerisch gesteuerte Mehrstationen-Umformanlage, an der komplex gestaltete Formteile überwiegend durch Umformen hergestellt und gegebenenfalls zusätzlich auch durch andere Bearbeitungsoperationen modifiziert werden können. Die computernumerische Steuereinheit 190 zur Steuerung aller daran angeschlossenen Komponenten kann beispielsweise in einem Schaltkasten untergebracht sein.

Das metallische Ausgangsmaterial W (Draht oder Rohr) liegt in Form eines nicht dargestellten aufgewickelten Materialvorrats (coil) vor. Die Umformanlage umfasst eine Konfektioniermaschine 200 zur Herstellung von gerade gerichteten Werkstücken WS vorgebbarer Länge aus dem zunächst noch gekrümmten Ausgangsmaterial sowie eine der Konfektioniermaschine 200 nachgeschaltete Umformmaschine 300 zum Herstellen komplex gebogener und/oder auf andere Weise in ihrer Gestalt gezielt veränderte Umformteile aus den geraden Werkstücken.

Die Konfektioniermaschine weist eine Einzugseinrichtung 270 zum Einziehen von Werkstückmaterial von dem aufgewickelten Materialvorrat, eine Richteinrichtung 275 zum Richten des Werkstückmaterials W sowie eine nachgeschaltete Schnitteinrichtung 280 zum Abtrennen von gerichteten Werkstückabschnitten WS vom zugeführten Werkstückmaterial auf.

Bei einer anderen Ausführungsform ist die Einzugseinrichtung in Materialflussrichtung hinter der Richteinheit angeordnet. Üblicherweise wird bei Nutzung eines Rollenrichtapparats als Richteinheit dieser zwischen Haspel und Einzugseinrichtung angeordnet, während für eine Richteinheit mit rotierendem Richtflügel (rotierendes Richten) die gezeigte Abfolge mit Richteinheit zwischen Einzug und Schnitteinrichtung gewählt wird.

Unmittelbar bei der Schnitteinrichtung 280 findet die Übergabe der abgetrennten geraden Werkstücke zur nachgeschalteten Umformmaschine 300 statt. Dort befindet sich die Ladestation 400 der Umformmaschine.

Die Umformmaschine 300 hat ein verwindungssteifes Maschinengestell 310, das eine vertikale Montagewand 312 umfasst, deren vertikale Vorderseite 313 parallel zur x-z-Ebene des Maschinenkoordinatensystems MKS liegt. Die horizontale y-Richtung verläuft senkrecht zur Vorderseite 313. An der Vorderseite sind flexibel nutzbare Montagestrukturen mit einer Vielzahl von mit Abstand übereinander angeordneten, horizontalen Montagenuten 314 mit T-Profil ausgebildet. Diese erlauben es, an jeder beliebigen Position in der x-Richtung Komponenten der Umformmaschine anzubringen, insbesondere die Komponenten von werkzeugtragenden Bearbeitungseinheiten, die die Arbeitsstationen der Mehrstationen-Umformmaschine bilden sollen. Zusätzlich zu den horizontalen Montagenuten können Montagebohrungen und andere Strukturen zur Befestigung von Komponenten vorliegen. Die horizontale x-Richtung wird hier auch als Längsrichtung bezeichnet, die horizontale y-Richtung als Querrichtung und die z-Richtung als Höhenrichtung.

Die Umformmaschine 300 hat in der dargestellten Ausbaustufe vier Arbeitsstationen, nämlich die Ladestation 400, die bei der Schnitteinrichtung 280 liegt, sowie drei in horizontaler Reihe aufeinanderfolgende Umformstationen, nämlich eine erste Umformstation 410, eine zweite Umformstation 420 und eine dritte Umformstation 430.

Die erste Umformstation 410 ist als Biegestation zum Biegen des Werkstücks mittels Fingerbiegen bzw. Stift-Dorn-Biegen ausgebildet und hat dazu einen Biegekopf mit vertikal ausgerichteter Biegekopfachse. Der Biegekopf weist ein um die Biegekopfachse drehbares Biegewerkzeug mit einem exzentrisch zur Biegekopfachse angeordneten Biegestift auf, der sich um ein zentrales Werkzeugteil mit daran angebrachten Biegedornen unterschiedlicher Durchmesser drehen lässt.

Zwischen der Ladestation 400 und der ersten Umformstation 410 ist an der Montagewand 312 ein Manipulator 415 angebracht, der einen Greifer aufweist, welcher mittels eines eigenen Antriebs des Manipulators um eine in x-Richtung verlaufende Drehachse drehbar ist und der es erlaubt, an der ersten Arbeitsstation das Werkstück zu greifen und um eine horizontale Achse zu drehen, z.B. um die Biegeebene zu wechseln.

Der Manipulator 415 kann in x-Richtung verfahren werden (Doppelpfeil), so dass an verschiedenen Stellen des Werkstücks Biegungen angebracht werden können oder damit beim Biegen Material zugeführt werden kann, was bspw. für das Rotationszugbiegen sinnvoll ist. Damit sind an der Biegestation z.B. Biegen, exzentrisches Biegen und Wickeln möglich.

Die zweite Umformstation 420 ist mit drei parallel zueinander ausgerichteten Biegeeinheiten 425-1, 425-2, 425-3 mit linear verfahrbaren Biegeschiebern ausgestattet, die es erlauben, die dort ankommenden, beiets gebogenen Werkstücke mittels Biegeschiebern zu biegen. An der dritte Umformstation 430 sind drei in Winkeln zueinander angeordnete Biegeschieber angebracht. An den Arbeitsstationen sind zusätzlich noch von unten zustellbare Gegenwerkzeuge angebracht, die als Gegenelement zu den Biegeschiebern dienen und Teile der resultierenden Form vorgeben. Die Biegeschieber der einzelnen Arbeitsstationen können variabel verfahren werden. Beispielsweise können sie gekoppelt oder voneinander getrennt verfahren und dabei kraftgesteuert, positionsgesteuert oder weggesteuert betrieben werden.

Zusätzlich zu zwei oder mehr Umformstationen können noch andere Bearbeitungsstationen und/oder andere Arbeitsstationen vorgesehen sein. Beispielsweise kann es sein, dass am zu erzeugenden Formteil ein Abschnitt mit Gewinde, Rillen, Rändel oder Ähnlichem zu fertigen ist. Die Erzeugung eines Gewindes kann beispielsweise mit einer Flachbackenwalze geschehen, die z.B. zwischen der Schnittvorrichtung 280 und der ersten Umformbearbeitung an der ersten Umformstation 410 angeordnet sein kann. Eine Gewindeherstellung mittels eines Rollierkopfs kann am Ende der Operation, also hinter der dritten Umformeinheit 430, vorgesehen sein. Bei Bedarf kann auch eine spanende Bearbeitung am abgetrennten Werkstück vorgenommen werden, beispielsweise durch Anfasen, Planieren oder Anspitzen. Eine entsprechende spanende Bearbeitungsstation kann beispielsweise zwischen der Schnittvorrichtung 280 und der ersten Umformstation 410 angeordnet sein, damit die spanende Bearbeitung am noch geraden Werkstück durchgeführt werden kann. Mindestens eine Arbeitsstation kann bei Bedarf eine CNC-Presse aufweisen, beispielsweise um an einem Formteil aus Rundmaterial einen abgeflachten Abschnitt zu erzeugen. Es kann auch eine Messstation vorgesehen sein, z.B. um die Geometrie des gemessenen Formteils mittels einer Kamera und Bildverarbeitung optisch zu bestimmen.

Zum Transfer bzw. Transport der Werkstücke zwischen den Arbeitsstationen weist die Umformmaschine ein Transportsystem 500 auf. Dieses ist modular aufgebaut und umfasst im dargestellten Beispielsfall vier Transportmodule 550-1, 550-2, 550-3 und 550-4. Jedes der Transportmodule ist eine gesondert vormontierte Baugruppe.

Für die Montage der Transportmodule gibt es unterschiedliche Möglichkeiten. Beispielsweise können die Transportmodule mittels einer Tragekonsole an der Vorderseite der Montagewand 312 befestigt werden.

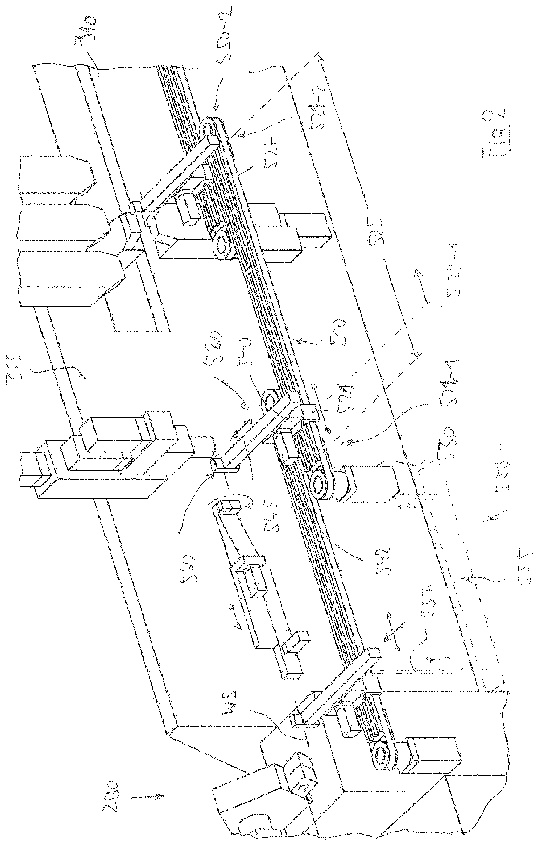

Die Transportmodule können jedoch auch unabhängig von der Montagewand 310 montiert werden. Sie können z.B. auf dem Boden oder einem Grundträger befestigt sein, der nicht an der Montagewand hängt oder mit dieser verbunden ist. In Fig. 2 sind unter der länglichen Tragestruktur des ersten Transportmodul 550-1 mit gestrichelten Linien Komponenten einer Stützkonstruktion 555 dargestellt, die die horizontale Tragestruktur des ersten Transportmoduls trägt und mit Abstand vor der Montagewand steht. Die Stützfüße 557 sind höhenverstellbar. Dadurch kann das Transportmodul bzw. dessen Tragestruktur abgesenkt werden, wodurch freier Zugang zur Montagewand und zum Rüsten der Werkzeuge möglich wird. Eine entsprechende Höhenverstellung ist hier bei jedem der Transportmodule vorgesehen.

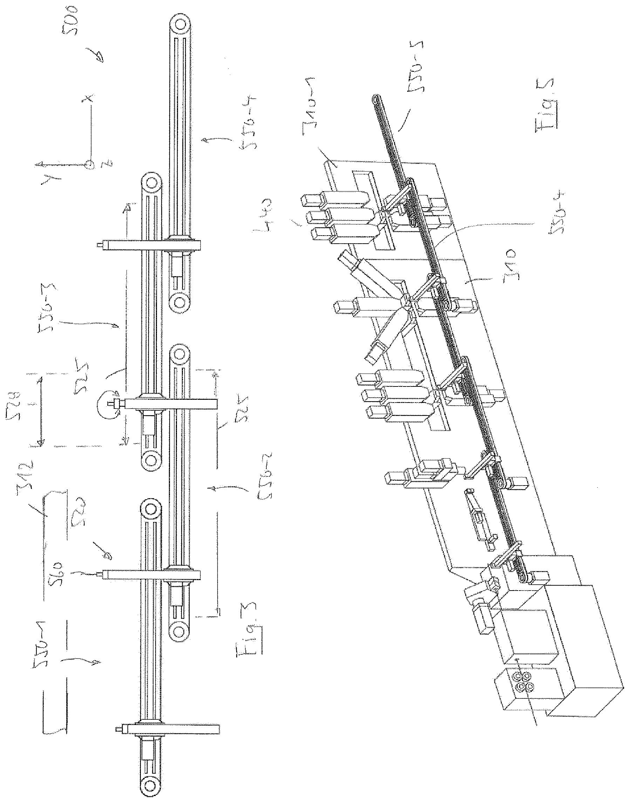

Alle Transportmodule sind nominell identisch oder weitgehend identisch aufgebaut und sorgen gemeinsam für einen sukzessiven Transfer aufeinanderfolgender Werkstücke von der Ladestation 400 zu allen drei nachfolgenden Bearbeitungsstationen und danach zu einem Abtransport 440. Diese Haupt-Transportrichtung verläuft in x-Richtung. Das Transportsystem 500 ist in Fig. 2 ausschnittsweise im größeren Detail und in Fig. 3 in Draufsicht von oben dargestellt.

Das erste Transportmodul 550-1 ist für den Transport von abgeschnittenen geraden Werkstücken zwischen Ladestation 400 bzw. Schnitteinrichtung 280 und erster Bearbeitungsstation 410 vorgesehen. Das zweite Transportmodul 550-2 sorgt für den Transport zwischen erster Umformstation 410 und zweiter Umformstation 420. Das dritte Transportmodul 550-3 nimmt an der zweiten Umformstation 420 das dort gefertigte Werkstück auf und transportiert es zur dritten Umformstation 430. Das vierte Transportmodul 550-4 ist für den Abtransport zuständig, z.B. für den Transport von der dritten und letzten Biegestation zu einer nicht dargestellten Übergabestation.

Am Beispiel des zweiten Transportmoduls 550-2 wird dessen Aufbau näher erläutert (vgl. Fig. 2). Ein Transportmodul hat eine horizontal in x-Richtung langgestreckte, schmale Tragestruktur 510, deren in x-Richtung gemessene Länge z.B. mehr als 10 Mal oder mehr als 15 Mal so groß sein kann wie ihre in y-Richtung gemessene Breite. Die Länge beträgt gleichzeitig nur einen Bruchteil der Gesamtlänge des Transportsystems zwischen Ladestation 400 und Abholung, z.B. weniger als 50%, z.B. zwischen 10% und 40% (abhängig von der Anzahl von Transportmodulen in der gesamten Transportstrecke). Die Tragstruktur kann mit einer nicht dargestellten Konsole in einem gewissen Abstand zur Vorderseite 313 der Montagewand 312 befestigt sein oder frei stehen.

Jede Tragestruktur trägt eine einzige Transporteinheit 520, die mittels eines Schlittens 521 auf zwei an der Oberseite der Tragestruktur angebrachten Führungsschienen in x-Richtung verschiebbar geführt ist. Zum Bewegen der Transporteinheit 520 in x-Richtung (Haupt-Transportrichtung) ist ein Modul-eigenes Antriebssystem vorgesehen, das einen Transportantrieb 530 umfasst, der im Beispielsfall als Servomotor mit vertikaler Drehachse ausgebildet ist und an einem Ende der Tragestruktur montiert ist. Der Servomotor treibt einen horizontal umlaufenden Zahnriemen 524 an, der in den axialen Endbereichen der Tragestruktur über Umlenkrollen geführt ist. Der Schlitten ist am Zahnriemen befestigt und kann mithilfe des Transportantriebs 530 zwischen einem dem Transportantrieb 530 nächsten ersten Ende 521-1 und einem am weitesten davon entfernten zweiten Ende 521-2 im Pendelbetrieb hin- und her bewegt werden. Die Strecke zwischen den Enden 521-1 und 521-2 wird hier als Modul-Transportstreckte 525 bezeichnet und entspricht dem maximalen Hub der Pendelbewegung in x-Richtung. Mithilfe dieses Antriebskonzepts können auch Pendelbewegungen mit kürzerem Pendelhub in x-Richtung realisiert werden.

Eine Pendelbewegung muss nicht über die gesamte Modul-Transportstrecke 525 verlaufen. Der Pendelhub der tatsächlich genutzten Pendelbewegung verläuft zwischen einer ersten Endposition 522-1 der Pendelbewegung und der gegenüberliegenden zweiten Endposition der Pendelbewegung.

Auf dem mithilfe des Transport-Antriebs 530 horizontal in x-Richtung verfahrbaren Schlitten 521 ist ein Grundträger 540 befestigt, der einen senkrecht zur Modul-Transportstrecke horizontal in y-Richtung verfahrbaren Greifarm 545 mit Rechteckprofil trägt. Dieser trägt an seinem der Vorderwand zugewandten Ende eine beispielsweise pneumatisch betätigbare mechanische Greifeinheit 560 zum Greifen eines Werkstücks. Die in y-Richtung laufende Horizontalbewegung (Querhub) des Greifarms wird mithilfe eines Antriebs 542 erzeugt, der am Grundträger der Transporteinheit 520 angebracht ist und mit diesem in x-Richtung verfahren kann. Eine Transporteinheit kann z.B. mithilfe einer geeignet dimensionierten einbaufertigen Linearachse aufgebaut werden, die vom Hersteller Bosch Rexroth AG unter der Bezeichnung "Omegamodul" vertrieben wird.

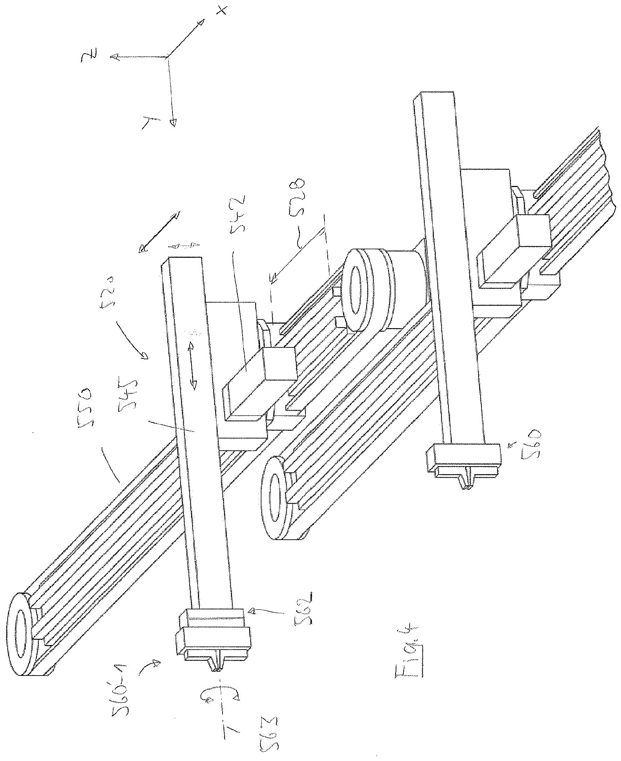

In Fig. 4 sind zwei unterschiedliche Möglichkeiten zur Anbringung einer Greifeinheit dargestellt. Im vorderen Beispiel ist die Greifeinheit 560 fest am horizontal verfahrbaren Greifarm montiert. Im dahinter dargestellten Beispiel ist die Greifeinheit 560-1 mithilfe einer zwischen Greifeinheit und Greiferarm eingebauten Drehgruppe 562 um 180° um eine in y-Richtung orientierte Greifeinheits-Drehachse 563 drehbar. Der zusätzliche Aufbau bzw. die zusätzliche Länge dieser Einheit in y-Richtung kann durch den variablen Hub in y-Richtung kompensiert werden.

Vorzugsweise sind die Greifarme gesteuert höhenverstellbar. Für die Funktionen Drehen und Heben/Senken kann jeweils z.B. ein pneumatischer oder servoelektrischer Antrieb vorgesehen sein. Die Bewegungen können über die Steureeinrichtung frei programmiert werden

Wie besonders gut in Fig. 2 und Fig. 3 erkennbar ist, sind die Transportmodule in der horizontalen x-y-Ebene in zwei Reihen hintereinander angeordnet, wobei das erste und das dritte Transportmodul näher zur Montagewand 312 angeordnet sind, während das zweite und das vierte Transportmodul jeweils in x-Richtung um einen Bruchteil der Modul-Transportstrecke versetzt in zweiter Reihe mit etwas größerem Abstand zur Montagewand angeordnet sind. Durch die zweireihige Anordnung mit Versatz in Haupt-Transportrichtung ergibt sich, dass die Transportstrecken unmittelbar aufeinanderfolgender Transportmodule im Bereich einer Arbeitsstation innerhalb eines Überlappungsbereichs 528 überlappen. Die Länge des Überlappungsbereichs kann dabei bis zu fast der Hälfte der Länge der Modul-Transportstrecke betragen, z. B. von 20% bis zu zwischen 40% dieser Länge, so dass es vor jeder Arbeitsstation einen relativ breiten Bereich gibt, der sowohl von der Transporteinheit eines vorgeschalteten Transportmoduls als auch von der Transporteinheit des nachgeschalteten Transportmoduls angefahren werden kann.

Das modular aufgebaute Transportsystem 500 ist hinsichtlich der Manipulationsmöglichkeiten hochgradig flexibel. Der Hub in x-Richtung (Haupt-Transportrichtung bzw. Richtung der x-Pendelbewegung) ist an jeder Arbeitsstation unabhängig von den anderen Arbeitsstationen steuerbar. Gleiches gilt für den Hub in y-Richtung, die auch als Querrichtung bezeichnet wird und die Bewegung der Greifeinheiten zu den Arbeitsstationen hin und von diesen weg realisiert. Durch die gegenseitige Überlappung der Pendelhübe benachbarter Transporteinheiten ist in x-Richtung an jeder Arbeitsstation ein Überhub möglich.

Es besteht auch die Möglichkeit, eine Arbeitsstation von zwei unterschiedlichen Seiten (in x-Richtung) zu bedienen. Ein Biegeteil kann in y-Richtung entnommen, mittels eines drehbaren Greifers (vgl. Fig. 4) um die y-Achse gedreht und in y-Richtung nochmals zur Arbeitsstation bewegt werden. Die Bewegungsmöglichkeit sieht im Beispielfall vor, ein Teil in y-Richtung zu versetzten, ein Teil in y-Richtung zwei mal mit leichtem Versatz in x-Richtung zuzuführen oder um die y-Achse zu drehen und ein zweites. mal zuzuführen.

Bei jedem Transportmodul kann deren Greifeinheit aufgrund der separaten Antriebe für den x-Hub und den y-Hub unabhängig von den Greifeinheiten der anderen Transportmodule flexibel in x-Richtung und y-Richtung verfahren werden. Damit ergibt sich hohe Flexibilität unter anderem für die Teilung zwischen den Arbeitsstationen. Als "Teilung" wird hier der in x-Richtung gemessene Abstand zwischen benachbarten Arbeitsstationen bzw. deren Werkstückhalteeinrichtungen bezeichnet. Bei der Konfiguration in Fig. 1 ist die Teilung gleichmäßig bzw. konstant. Es ist jedoch ohne Weiteres möglich, andere und/oder ungleiche Teilungen vorzusehen. Prinzipiell kann eine Bearbeitungsstation an jeder Stelle eines Überlappungsbereichs zwischen aufeinanderfolgenden Transportmodulen angebracht und dort "bedient" werden. Eine exakte Positionierung in Horizontalrichtung ist nicht erforderlich, da über die Steuerung die Transporteinheiten der beiden für die Arbeitsstationen zuständigen Transportmodule innerhalb von deren Modul-Transportstrecken an jede Position verfahren werden können.

Das Konzept ist nicht nur hinsichtlich unterschiedlicher Abstände zwischen Arbeitsstationen hoch flexibel. Die Umformmaschine ist auch sehr einfach um weitere Funktionalitäten erweiterbar (vgl. Fig. 5). In der in Fig. 1 gezeigten Grundausbaustufe ist ein Maschinengestell 310 als Grundeinheit vorhanden. Soll die Maschine um weitere Arbeitsstationen erweitert werden, kann mindestens ein weiteres Maschinengestell-Modul 310-1 angebaut werden (vgl. Fig. 5). Dessen erste Arbeitsstation, die dann die vierte Umformstation 440 bildet, wird dann über das vierte Transportmodul 550-4 bzw. dessen Transporteinheit angefahren. Es kann dann ein weiteres Transportmodul 550-5 anmontiert werden, um den Abtransport oder Weitertransport zu eventuellen weiteren Bearbeitungsstationen zu ermöglichen.

Die Umformanlage kann unter der Steuerung der Steuereinheit 190 beispielsweise wie folgt arbeiten. Die Konfektioniermaschine 200 stellt sukzessive gerade gerichtete Werkstückabschnitte zur Verfügung, die vom zugeführten Endlosmaterial mithilfe der Schnitteinheit 280 sukzessive abgetrennt werden.

Die Greifeinheit des ersten Transportmoduls 550-1 kann den abzutrennenden Werkstückabschnitt vor Abtrennen eines nächsten Werkstücks ergreifen und festhalten, bis er vom zugeführten Werkstückmaterial abgetrennt ist. Alternativ kann der Draht auch geschnitten werden und dann dem Greifer über z.B. eine einfach Rollstrecke zur Verfügung gestellt werden.

Danach wird die Greifeinheit mit einem negativen y-Hub nach vorn zurückgezogen. Danach oder zeitlich damit überlappend fährt die Transporteinheit des ersten Transportmoduls 550-1 mit dem gegriffenen Werkstück entlang der Modul-Transportstrecke des ersten Transportmoduls zur ersten Umformstation 410, die hier als Biegestation zum Stift-Dorn-Biegen ausgelegt ist. Der Greifer fährt dann in Richtung Vorderwand bis in eine Bearbeitungsposition des Werkstücks. Dieses kann dann durch den Manipulator 415 ergriffen und für eine erste Biegeoperation festgehalten werden. Sofern an der ersten Umformstation noch eine zweite Biegung in einer anderen Biegeebene erzeugt werden soll, wird das Werkstück mittels des drehbaren Greifers des Manipulators 415 entsprechend gedreht und ggf. in x-Richtung verfahren. Nach Abschluss der Umformoperationen an der ersten Umformstation 410 fährt die Greifeinheit der Transporteinheit des zweiten Transportmoduls 550-2 nach vorn und ergreift das Werkstück. Nach Zurückziehen (negativer y-Hub) wird das Werkstück mithilfe einer Fahrbewegung in x-Richtung zur zweiten Umformstation 420 gefahren und dort über einen positiven y-Hub in die Bearbeitungsposition unterhalb der drei Biegeschieber verfahren. Durch koordiniertes Ansteuern der Biegeschieber wird dann die dortige, ggf. mehrstufige Umformoperation durchgeführt. Das dort fertig umgeformte Werkstück wird dann von der Greifeinheit der Transporteinheit des dritten Transportmoduls 550-3 ergriffen, nach vorne verfahren und dann in Richtung der dritten Umformstation bewegt. Dort wird die letzte Umformoperation durchgeführt, bevor der Greifer des vierten Transportmoduls 550-4 das fertig umgeformte Werkstück ergreift und in Richtung des hinteren Endes des vierten Transportmoduls zum Abtransport bewegt.

Alle Transporteinheiten 520 können zeitgleich bzw. zeitlich überlappend arbeiten und dabei individuelle Bewegungsprofile ablaufen. Nachdem die erste Transporteinheit das gerade Werkstück an die erste Umformstation übergeben hat, kann es zurückfahren und das nächste Werkstück an der Ladestation 400 ergreifen, während das vorhergehende Werkstück an der ersten Umformstation umgeformt wird. Dann wird das nächste Werkstück in der beschriebenen Reihenfolge durch die aufeinanderfolgenden Arbeitsstationen transportiert. Es müssen nicht alle Transporteinheiten ständig in Bewegung sein. Beispielsweise kann es sein, dass an einer Arbeitsstation auch ein Umspannen des Werkstücks gewünscht ist, um dort weitere Umformoperationen durchzuführen. Im Beispiel von Fig. 3 ist die Konfiguration beispielsweise so, dass an den Transporteinheiten des ersten, zweiten und vierten Transportmoduls jeweils ein nicht drehbarer Greifer angebracht ist, während die Greifeinheit des dritten Transportmoduls 550-3 um eine parallel zur y-Richtung verlaufende Drehachse drehbar ist. Die Umformoperation an der dritten Arbeitsstation kann dann beispielsweise so durchgeführt werden, dass zunächst das Werkstück antransportiert, in eine Bearbeitungsstellung gebracht und umgeformt wird. Danach kann die dritte Greifeinheit das Werkstück ergreifen, durch Drehen der Greifeinheit um seine Drehachse umorientieren und nochmals in die Bearbeitungsposition zwischen die Schieber bringen. Während dieser Operationen können die anderen Transporteinheiten zeitweise stillstehen. Die Taktzeit wird letztendlich durch die langsamste der Umformoperationen an einer Arbeitsstation bestimmt.

Bezüglich der Transportmöglichkeiten bzw. des Transfers bei manchen Ausführungsformen kann somit u.a. vorgesehen sein, dass
(i) es in x-Richtung (Haupt-Transportrichtung) eine mechanische Grundposition gibt, die für die Teilsysteme unterschiedlich sein kann, wobei sich die Teilsysteme dann auch noch überlappen können und programmierbar nicht immer über 100% der konstruktiv möglichen Verfahrwege ausfahren müssen;
(ii) in y-Richtung unterschiedliche Hübe programmiert werden können, die auch noch an einer Station mehrfach, z.B. zweimal, stattfinden können;
(iii) wobei das Verfahrprofil zwischen "eckig" und "rund" zudem mit variabler Beschleunigung und Geschwindigkeit programmiert werden kann; und
(iv) zudem am Ende des Hubs die Greifer "von links" oder "von rechts" in die Umformstation einfahren können.

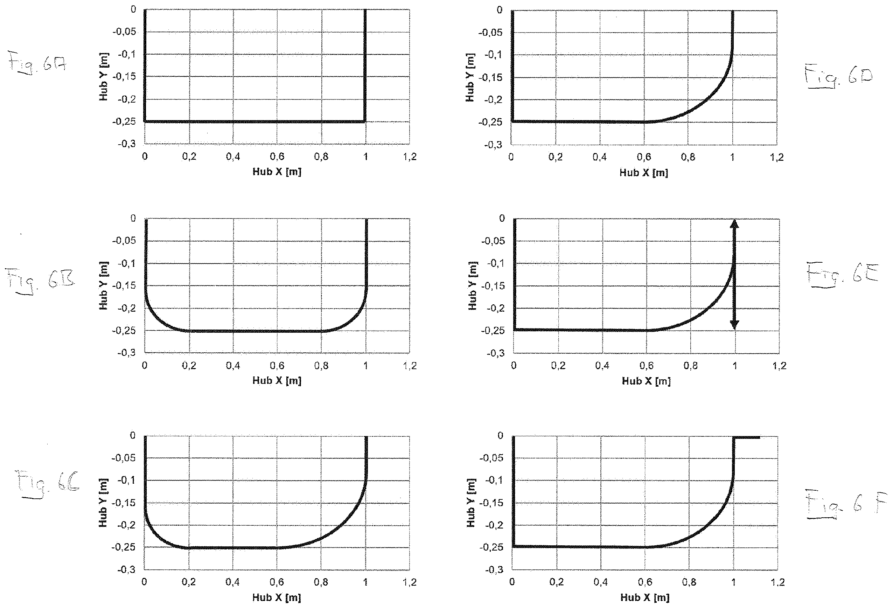

Zur Veranschaulichung möglicher individueller Bewegungsprofile und deren möglicher Kombinationen zeigen die Fig. 6A bis 6F verschiedene Beispiele für mögliche Bewegungsprofile bzw. Verfahrprofile, die sich aus den zusammengehörenden Hubwegen in x-Richtung ("Hub x", siehe Abszisse der Diagramme) und in y-Richtung ("Hub y", siehe Ordinate der Diagramme) ergeben. Bei dem Verfahrprofil "eckig" in 6A werden die y-Hübe und der x-Hub zeitlich nacheinander durchfahren. Beim Verfahrprofil "rund 1" in Figur 6B wird in der Endphase des ersten y-Hubs der x-Hub begonnen, so dass sich ein abgerundetes Verfahrprofill ergibt. Entsprechendes gilt am Ende der x-Bewegung. Das Verfahrprofil "rund 2" in 6C veranschaulicht, dass die Geschwindigkeitsverhältnisse zwischen x-Hub und y-Hub in den Phasen gleichzeitiger Betätigung unterschiedlich sein können. Figur 6D zeigt das Verfahrprofil "gemischt". Das Verfahrprofil in 6E veranschaulicht, dass der Greifer am Ende bis zu zweimal zur zugeordneten Bearbeitungsstation fährt. Bei dem Verfahrprofil in Fig. 6F verfährt der Greifer am Ende des zweiten y-Hubes noch einen Weg in x-Richtung, um das Werkstück in die Umformstation einführen zu können

Die Umformmaschine kann leicht umgerüstet und erweitert werden, indem zusätzlich zu den in der Grundkonfiguration vorhandenen Transportmodulen (im Beispielsfall vier Transportmodule) ein oder mehrere weitere Transportmodule an die Grundeinheit des Maschinengestells oder an eine Erweiterungseinheit montiert werden, so dass sich die Transportstrecke insgesamt verlängert. Fig. 5 zeigt dazu ein optionales zusätzliches fünftes Transportmodul 550-5, dessen Transporteinheit das Werkstück an der vierten Umformstation übernimmt und weitertransportiert.

Im Beispielsfall ist die Anlage eingerichtet, Drahtmaterial mit rundem Querschnitt (Rundmaterial) zu verarbeiten, das in Form von geraden Drahtstäben an die Umformmaschine übergeben wird. Es kann auch Flachmaterial verarbeitet werden.

Andere Ausführungsformen arbeiten mit bereits auf die benötigte Länge abgelängten geraden Werkstücken. Dort kann anstelle der Konfektioniermaschine ein Bunkerförderer oder eine andere Einrichtung zur sortierten Bereitstellung der vorgefertigten geraden Werkstücke zur Ladestation vorgesehen sein. Es können auch Rohlinge zugeführt werden, die nicht zwangsweise gerade sind, jedoch wird in der Regel das Ausgangswerkstück seiner länglichen Ausdehnung größtenteils gerade sein. Es können auch bereits vorbearbeitete Ausgangswerkstücke zur Umformmaschine gebracht werden, also solche, bei denen schon Bearbeitungen stattgefunden haben, also z.B. Werkstücke mit Rillen, Gewinde, Rändel, Plättungen, Bohrungen und/oder Stanzungen.

Die Umformmaschine ist dazu geeignet, mit im Wesentlichen geraden Rohlingen zu beginnen. Grundsätzlich ist es auch möglich, mit einem bereits gebogenen und/oder auf andere Weise vorbearbeiteten, ungeraden Ausgangswerkstück zu starten.

Ein Formteil kann bei der Herstellung des Endprodukts auch durch Hinzufügen von Material, modifiziert werden. Das Fügen kann durch Umformung erfolgen, z.B. durch Nieten, Clinchen Bördeln, oder durch Anprägen eines gesonderten Stücks, z.B. eines Blechstücks, ggf. auch durch Anschweißen von Material.

Die Aufgabe eines Transportmoduls könnte bei Bedarf durch einen einzelnen Mehrachsroboter realisiert werden. Bei Verwendung eines Mehrachsroboters zum Transportieren und/oder Manipulieren eines Werkstücks zwischen Arbeitsstationen einer Mehrstationen-Bearbeitungsmaschine ist man weitgehend frei im Bewegungsablauf, auch in z-Richtung, und es könnte einfacher sein, etwas mehr Freiraum beim Umrüsten der Werkzeuge zu bieten. Allerdings benötigt diese Lösung mit heutzutage verfügbaren Systemen wesentlich mehr Platz, erscheint tendenziell überdimensioniert, aufgrund der notwendigen Reichweite wesentlich teurer, schwierig in der Absicherung und auch schwierig in der Synchronisation (bzw. zumindest langsamer). Demgegenüber sind Transportmodule der in den Beispielen gezeigten Art optimal an die Transportaufgaben angepasst, relativ kostengünstig bereitstellbar und erlauben den Aufbau eines kompakten, effizienten Transportsystems für den Werkstücktransport in einer Mehrstationen-Umformmaschine.

## Patentansprüche

1. Umformmaschine (100) zur Herstellung komplex gestalteter Formteile aus geraden Werkstücken (WS) aus Draht oder Rohr umfassend:
eine computernumerische Steuereinheit (190);
mehrere Arbeitsstationen, die eine Ladestation (110), eine der Ladestation nachgeschaltete erste Bearbeitungsstation (410) und wenigstens eine der ersten Bearbeitungsstation (410) nachgeschaltete zweite Bearbeitungsstation (420) umfassen, wobei wenigstens zwei der Bearbeitungsstationen als Umformstationen ausgelegt sind;
ein Transportsystem (500) zum Transportieren aufeinanderfolgender Werkstücke (WS) von der Ladestation (400) zu nachgeschalteten Arbeitsstationen unter der Steuerung durch die Steuereinheit (190);
**dadurch gekennzeichnet, dass**
das Transportsystem (500) modular aufgebaut ist und mehrere Transportmodule (550) umfasst, wobei jedes der Transportmodule zwei aufeinander folgenden Arbeitsstationen zugeordnet ist und folgende Komponenten aufweist:
eine Tragestruktur (510);
eine von der Tragestruktur (510) getragene Transporteinheit (520),
die unter Steuerung durch die Steuereinheit (190) mit individuellem Bewegungsprofil im Pendelbetrieb entlang einer Modul-Transportstrecke (525) des Transportmoduls (550) zwischen einer ersten Endposition (522-1) und einer zweiten Endposition (522-2) eines Pendelhubs hin und her bewegbar ist und
eine Greifeinheit (560) zum Greifen eines Werkstücks aufweist.

2. Umformmaschine nach Anspruch 1, **dadurch gekennzeichnet, dass** die Greifeinheit (560) als mechanische Greifeinheit zum mechanischen Greifen eines Werkstücks oder als Magnet-Greifeinheit ausgebildet ist.

3. Umformmaschine nach Anspruch 1 oder 2, **dadurch gekennzeichnet, dass** die Modul-Transportstrecke (525) zwischen einem ersten Ende (521-1) und einem zweiten Ende (521-2) verläuft und dass die Steuereinheit (190) so konfiguriert oder konfigurierbar ist, dass die erste Endposition (522-1) des Pendelhubs mit Abstand vom ersten Ende (521-1) der Modul-Transportstrecke und/oder die zweite Endposition des Pendelhubs mit Abstand vom zweiten Ende der Modul-Transportstrecke liegt, so dass der Pendelhub kürzer ist als die Modul-Transportstrecke (525).

4. Umformmaschine nach einem der vorhergehenden Ansprüche, **dadurch gekennzeichnet, dass** ein Transportmodul (550) zum Bewegen der Transporteinheit (520) entlang der Modul-Transportstrecke (525) ein modul-eigenes Antriebssystem mit einem von der Tragestruktur (510) getragenen und durch die Steuereinheit ansteuerbaren Transportantrieb (530) aufweist.

5. Umformmaschine nach einem der vorhergehenden Ansprüche, **dadurch gekennzeichnet, dass** eine Transporteinheit (520) einen entlang der Modul-Transportstrecke (525) bewegbaren Grundträger (540) aufweist, der einen quer, insbesondere senkrecht zur Modul-Transportstrecke (525) verfahrbaren Greifarm (545) mit einer am Greifarm montierten Greifeinheit (560) trägt, wobei der Grundträger (540) einen durch die Steuereinheit ansteuerbaren Antrieb (542) zur Bewegung des Greifarms (545) trägt.

6. Umformmaschine nach Anspruch 5, **dadurch gekennzeichnet, dass** bei wenigstens einer der Transporteinheiten (520) die Greifeinheit (560-1) um eine Greifeinheits-Drehachse (563) drehbar am Greifarm gelagert ist und/oder dass bei wenigstens einer der Transporteinheiten (520) die Greifeinheit (560-1) in Bezug auf den Grundträger höhenverstellbar ist.

7. Umformmaschine nach einem der vorhergehenden Ansprüche, **dadurch gekennzeichnet, dass** die Umformmaschine (300) ein Maschinengestell mit einer Montagewand (310) umfasst, die an einer Vorderseite (312) flexibel nutzbare Montagestrukturen mit einer Vielzahl von Montagenuten (314) und/oder Montagebohrungen zum Montieren von werkzeugtragenden Bearbeitungseinheiten zur Bildung der Arbeitsstationen aufweist, wobei die Montagewand vorzugsweise modular aufgebaut und mittels Montagewand-Modulen (310-1) erweiterbar ist.

8. Umformmaschine nach Anspruch 7, **dadurch gekennzeichnet, dass** die Transportmodule (550) unabhängig von der Montagewand (310) montiert sind, wobei vorzugsweise die Transportmodule (550) auf dem Boden oder auf einem Grundträger befestigt sind, der nicht an der Montagewand hängt oder mit dieser verbunden ist, oder dass die Transportmodule an dem Maschinengestell montiert sind, insbesondere an der Vorderseite (313) der Montagewand (312).

9. Umformmaschine nach Anspruch 7 oder 8, **dadurch gekennzeichnet, dass** die Transportmodule mittels einer Höhenverstellung derart absenkbar sind, dass ein freier Zugang zur Montagewand (310) und zum Rüsten der Bearbeitungsstationen möglich ist.

10. Umformmaschine nach einem der vorhergehenden Ansprüche, **dadurch gekennzeichnet, dass** Transportmodule (550) in zwei Reihen derart versetzt zueinander angeordnet sind, dass Modul-Transportstrecken (525) unmittelbar aufeinander folgender Transportmodule an einer Arbeitsstation in einem Überlappungsbereich (528) überlappen.

11. Umformungsanlage (100) zum Herstellen komplex gebogener Formteile aus Draht oder Rohr umfassend:
eine Einrichtung (200) zum Bereitstellen von geraden Werkstücken (WS) vorgebbarer Länge aus Drahtmaterial oder Rohrmaterial;
eine der Einrichtung (200) nachgeschaltete Umformmaschine (300) zum Herstellen komplex gebogener Formteile aus den geraden Werkstücken;
wobei die Umformmaschine (300) gemäß einem der Ansprüche 1 bis 10 ausgelegt ist.

12. Umformungsanlage (100) nach Anspruch 11, **dadurch gekennzeichnet, dass** die Einrichtung eine Konfektioniermaschine (200) zur Herstellung der geraden Werkstücke aus Werkstückmaterial aufweist, wobei die Konfektioniermaschine (200) eine Einzugseinrichtung (270) zum Einziehen von Werkstückmaterial von einem Materialvorrat, eine Richteinrichtung (275) zum Richten des Werkstückmaterials und eine Schnitteinrichtung (280) zum Abtrennen von gerichteten Werkstückabschnitten von dem zugeführten Werkstückmaterial aufweist.
